# FASCICULE DE BREVET EUROPEEN

(11) **EP 4 025 525 B1**
(45) Date de publication et mention de la délivrance du brevet: **22.07.2026**
(21) Numéro de dépôt: 20786459.6
(22) Date de dépôt: 02.09.2020
(51) Int. Cl.: B65G 1/137, E04H 14/00, G06Q 10/08, B65G 17/48, B65G 17/20, E04H 3/04, G06Q 10/087, G06Q 30/06

(54) **ENSEMBLE COMPRENANT UN SYSTEME DE REMISE D'UNE COMMANDE ET UNE COMMANDE ET PROCEDE CORRESPONDANT**
ANORDNUNG MIT EINEM SYSTEM ZUR LIEFERUNG EINER BESTELLUNG UND EINER BESTELLUNG UND ENTSPRECHENDES VERFAHREN
SET OF A SYSTEM FOR DELIVERING AN ORDER AND AN ORDER AND CORRESPONDING METHOD

(30) Priorité: 02.09.2019 FR 1909641
(43) Date de publication de la demande: 13.07.2022
(73) Titulaire: Exotec Product France, 59170 Croix (FR)
(72) Inventeur: MOULIN, Romain, 59800 LILLE (FR); HEITZ, Renaud, 59650 VILLENEUVE-D'ASCQ (FR); BAULARD, Gilles, 31470 FONTENILLES (FR)
(74) Mandataire: Plasseraud IP
(86) Numéro de dépôt international: PCT/EP2020/074474
(87) Numéro de publication internationale: WO 2021/043828

(56) Documents cités:
- EP-A1- 1 801 040
- EP-A1- 1 801 040
- WO-A1-2018/162123
- WO-A1-2018/162123
- BE-A3- 1 019 931
- BE-A3- 1 019 931
- DE-A1- 10 147 551
- DE-A1- 10 147 551
- DE-A1- 102009 014 457
- DE-A1- 102009 014 457
- DE-A1- 19 717 352
- DE-A1- 19 717 352
- FR-A1- 2 667 849
- FR-A1- 2 667 849
- GB-A- 2 294 437
- GB-A- 2 294 437
- JP-A- 2002 249 209
- JP-A- 2002 249 209
- US-A- 3 647 026
- US-A- 3 647 026
- US-B1- 7 381 022
- US-B1- 7 381 022

## Description

### 1. Domaine de l'invention

Le domaine de l'invention est celui de la logistique en magasin et en entrepôt, et en particulier du transport et du tri des articles.

Plus précisément, l'invention concerne un système et un procédé de remise d'une commande.

L'invention trouve notamment une application dans le retrait de produits alimentaires ou de grande consommation en point retrait, aussi appelé « Drive », et dans la livraison de marchandises en points relais.

### 2. Etat de la technique

Il est connu dans les magasins proposant un service de livraison de commande effectuées en lignes à un point retrait, dit service de « drive », qu'un ou plusieurs préparateurs entreposent les articles d'un commande collectés dans des sacs sur des étagères, en attendant que le client vienne retirer sa commande. Le tri des articles d'une commande peut être mis en œuvre lors de la tournée de ramassage ou au moment de mettre la commande sur étagère. US 3 647 026 A divulgue un ensemble comprenant, d'une part, un système de remise automatique d'une commande, configuré pour transporter et stocker des parties d'une commande, mises ou non en sac(s), la commande constituée d'une pluralité d'articles stockés dans un bâtiment, sur un emplacement de prélèvement de ladite commande situé à l'extérieur dudit bâtiment et, d'autre part, une commande comprenant au moins une partie des articles constitutifs de la commande qui ont été déposés dans un ou des sacs et des articles qui n'ont pas été déposés dans un sac, ledit système comprenant :
- une pluralité de sacs;
- des moyens de signalement et/ou de détection de la présence d'un utilisateur auquel la commande doit être remise à proximité dudit emplacement de prélèvement ;
- un module de transport monté au moins partiellement en hauteur et comprenant:
- au moins une piste de déplacement dont au moins une portion substantielle s'étend à l'intérieur dudit bâtiment;
- des moyens de suspension desdits sacs à ladite piste;
- des moyens de déplacement automatique desdits moyens de suspension sur ladite piste ;
- des moyens d'actionnement desdits moyens de déplacement automatique configurés pour déplacer les poches jusqu'au dit emplacement de prélèvement.
US 3 647 026 A divulgue également un procédé de remise automatique d'une commande, constituée d'une pluralité d'articles stockés dans un bâtiment, sur un emplacement de prélèvement de ladite commande situé à l'extérieur dudit bâtiment, ledit procédé comprenant les étapes suivantes:
- collecte des articles constitutifs de ladite commande et dépose d'au moins une partie desdits articles dans au moins un sac;
- suspension dudit ou desdits sacs à une piste d'un module de transport montée au moins partiellement en hauteur;
- signalement et/ou de détection de la présence d'un utilisateur auquel la commande doit être remise, à proximité dudit emplacement de prélèvement;
- transport des sacs sur ladite piste jusqu'audit emplacement de prélèvement comprenant une étape d'actionnement automatique de moyens de déplacement automatique de moyens de suspension desdits sacs à ladite piste, sur ladite piste.

Cette technique de préparation d'une commande présente de nombreux inconvénients.

Elle nécessite en effet un espace de stockage conséquent pour entreposer les commandes et une main d'œuvre importante.

En outre, avec cette technique un client qui vient retirer sa commande peut se voir imposer un temps d'attente plus ou moins long, le temps qu'un préparateur aille chercher sa commande dans les étagères pour lui remettre ou dans le cas où tous les préparateurs sont occupés à effectuer une tournée de ramassage et ne sont pas disponibles pour lui remettre sa commande.

Afin de limiter le temps d'attente d'un client, on a pensé à déposer les sacs dans des bacs qui sont envoyés dans un espace de stockage d'un système automatisé de stockage de bacs permettant une remise facilitée de sa commande au client.

Un inconvénient de cette technique mettant en œuvre des bacs est qu'elle nécessite de gérer des bacs.

Un autre inconvénient de cette technique est qu'elle est couteuse à mettre en œuvre. On a par ailleurs constaté que dans beaucoup de magasins des Grandes et Moyennes Surfaces, son coût d'installation s'avère prohibitif.

### 3. Objectifs de l'invention

L'invention a donc notamment pour objectif de pallier les inconvénients de l'état de la technique cités ci-dessus.

Plus précisément l'invention a pour objectif de fournir une technique de remise d'une commande qui limite le nombre d'interventions des opérateurs.

Un objectif de l'invention est également de fournir une telle technique de remise d'une commande qui soit simple à mettre en œuvre.

Un autre objectif de l'invention est de fournir une telle technique de remise d'une commande qui libère de l'espace au sol.

Encore un objectif de l'invention est de fournir une telle technique qui soit d'un coût de revient et d'un coût d'exploitation réduits.

### 4. Exposé de l'invention

Ces objectifs, ainsi que d'autres qui apparaitront par la suite sont atteints à l'aide d'un ensemble selon la revendication 1 comprenant d'une part, un système de remise automatique d'une commande, configuré pour transporter et stocker des parties d'une commande, mises ou non en sac(s), la commande constituée d'une pluralité d'articles stockés dans un bâtiment, sur un emplacement de prélèvement de ladite commande situé à l'extérieur dudit bâtiment et, d'autre part, une commande comprenant au moins une partie des articles constitutifs de la commande qui ont été déposés dans un ou des sacs et des articles qui n'ont pas été déposés dans un sac..

Selon l'invention, un tel système de remise automatique d'une commande comprend :
- une pluralité de poches adaptées pour recevoir un sac, une desdites poches comprenant le ou les sacs dans lesquels au moins une partie des articles constitutifs de la commande ont été déposés, ladite poche comprenant en outre les articles qui n'ont pas été déposés dans un sac ;
- des moyens d'association à des poches choisies dans ladite pluralité de poches dans lesquelles sont déposés des articles de ladite commande d'une information d'identification de ladite commande;
- des moyens de signalement et/ou de détection de la présence d'un utilisateur auquel la commande doit être remise, ou d'un camion destiné à prendre en charge ladite commande, à proximité dudit emplacement de prélèvement ;
- un module de transport monté au moins partiellement en hauteur et comprenant :
   - au moins une piste de déplacement dont au moins une portion substantielle s'étend à l'intérieur dudit bâtiment ;
   - des moyens de suspension desdites poches à ladite piste ;
   - des moyens de déplacement automatique desdits moyens de suspension sur ladite piste ;
   - des moyens d'actionnement desdits moyens de déplacement automatique configurés pour déplacer les poches dans lesquelles ont été déposées les différents articles de ladite commande et auxquelles a été associée une information d'identification de ladite commande, jusqu'audit emplacement de prélèvement lorsque lesdits moyens de signalement et/ou de détection émettent un signal de confirmation de la présence dudit utilisateur ou dudit camion à proximité dudit emplacement de prélèvement.

Ainsi, de façon inédite, l'invention propose de mettre en œuvre des poches suspendues en hauteur pour transporter et stocker des parties d'une commande, mises ou non en sac(s), jusqu'à un emplacement de prélèvement à l'extérieur d'un magasin, où la commande va être remise d'une façon automatique au client destinataire de la commande, ou à un camion de livraison à son arrivée, à proximité de l'emplacement de prélèvement.

L'emplacement de prélèvement peut être par exemple un lieu de parking dédié d'un « drive » et être situé plus ou moins proche d'un magasin, ou le volume de stockage d'un camion.

Dans le cadre de l'invention, on entend par le terme « à proximité » que le destinataire de la commande est à moins de quelques mètres, voire quelques centaines de mètres de l'emplacement de prélèvement. Ainsi par exemple, il peut être prévu que les moyens de signalement et/ou de détection soit configurés pour émettre un signal de confirmation de la présence de l'utilisateur ou du camion lorsque celui-ci s'arrête à proximité immédiate de l'emplacement de prélèvement ou bien, dans un autre mode de réalisation, lorsque l'utilisateur ou le camion franchit une entrée du parking du magasin ou passe à un endroit spécifique du parking.

Il convient enfin de noter que du fait que les poches sont suspendues en hauteur, l'invention permet un gain de place au sol très important.

Par ailleurs, on notera que dans le cadre de l'invention, la piste peut s'étendre à la fois à l'intérieur et à l'extérieur du bâtiment ou seulement à l'intérieur du bâtiment.

Selon un mode de réalisation particulier de l'invention, ladite piste comprend une chaîne logée dans un rail.

Dans un mode de réalisation avantageux de l'invention, ladite piste est fixée à un plafond ou à une mezzanine dudit bâtiment.

Dans une variante de ce mode de réalisation de l'invention, il peut être envisagé de fixer ladite piste à une structure de portage dédiée, comprenant par exemple un ou plusieurs portiques.

De façon avantageuse, ledit module de transport comprend des moyens de tri des poches de ladite pluralité de poches destinés à regrouper les poches auxquelles a été associée une information d'identification de ladite commande dans au moins une zone dudit bâtiment.

Ainsi les poches contenant les articles d'une commande peuvent être regroupées préalablement, ce qui permet une remise plus rapide de la commande.

Selon un aspect de l'invention, lesdits moyens de signalement et/ou de détection comprennent au moins un élément de signalement et/ou de détection appartenant au groupe comprenant au moins :
- lecteur de code barre ;
- lecteur de QR code ;
- lecteur de bande magnétique ou de puce ;
- clavier numérique permettant de saisir un code ;
- application dédiée téléchargeable sur un terminal de l'utilisateur ;
- lecteur d'identification biométrique, tel qu'un lecteur d'empreinte digitale ;
- capteur de présence ;
- système de géolocalisation.

Dans un mode de réalisation particulier de l'invention, lesdites poches sont formées d'une toile, ou d'un filet, équipée de deux anses.

Des poches souples présentent l'avantage de pouvoir se replier et d'occuper un espace réduit lorsqu'elles ne contiennent pas d'articles

Dans d'autres modes de réalisation de l'invention, les poches peuvent être formées en tout ou partie de portions rigides, par exemple pour pouvoir porter des articles lourds, tels que des packs d'eau minérale, ou des objets fragiles, tels que des boites d'œufs, par exemple.

Avantageusement, ledit module de transport comprend des moyens de stockage temporaire d'au moins une desdites poches dans au moins une zone de stockage en hauteur dudit bâtiment.

Il peut être prévu plusieurs zones de stockage en hauteur pour stocker des articles provenant de différentes

Dans un mode de réalisation particulièrement avantageux de l'invention, ladite zone de stockage est une zone à température contrôlée.

Ces zones peuvent être des zones de conservation au froid positif ou des zones de conservation à des températures négatives, adaptées par à des produits surgelés. Ainsi, on prélever à l'avance des produits frais ou surgelés dans les rayons d'un magasin ou des chambres froides et les stocker sur le module de transport dans l'attente de remettre la commande au client ou à un camion venu prendre en charge la commande.

Selon un mode de réalisation particulier de l'invention, ledit module de transport comprend un tunnel enveloppant une portion de ladite piste, s'étendant à l'extérieur dudit bâtiment au-dessus d'une voie de circulation pour véhicule automobile.

Ainsi, le destinataire d'une commande peut accéder aisément à l'emplacement de prélèvement avec son véhicule et peut charger directement sa commande dans son coffre.

Selon un mode de réalisation particulier de l'invention, ledit emplacement de prélèvement de ladite commande est le volume de chargement d'un camion.

Ainsi, on peut charger aisément une commande dans un camion, qui va assurer sa livraison sur un point relai.

Dans un mode de réalisation particulier de l'invention, un système de remise automatique d'une commande tel que décrit ci-dessus comprend un module d'entreposage de poches destiné à être monté dans le volume de chargement dudit camion et des moyens de connexion dudit module d'entreposage de poches avec ladite piste, comprenant des moyens de transfert desdites poches dudit module d'entreposage vers ladite piste.

Ainsi il est possible de transférer directement les poches d'une commande dans un camion, ou inversement de vider un camion, sans intervention humaine.

L'invention concerne également un procédé de remise automatique d'une commande, constituée d'une pluralité d'articles stockés dans un bâtiment, sur un emplacement de prélèvement de ladite commande situé à l'extérieur dudit bâtiment.

Selon l'invention, un tel procédé comprend les étapes suivantes :
- collecte des articles constitutifs de ladite commande et dépose d'au moins une partie desdits articles dans au moins un sac ;
- dépose dudit ou desdits sacs et des articles qui n'ont pas été déposés dans un sac chacun dans une poche choisie dans une pluralité de poches et suspendue à une piste d'un module de transport montée au moins partiellement en hauteur ;
- association auxdites poches dans lesquelles ont été déposées des parties de ladite commande d'une information d'identification de ladite commande ;
- signalement et/ou de détection de la présence d'un utilisateur auquel la commande doit être remise, ou d'un camion destiné à prendre en charge ladite commande, à proximité dudit emplacement de prélèvement comprenant une étape d'émission d'un signal de confirmation de la présence dudit utilisateur ou dudit camion à proximité dudit emplacement de prélèvement ;
- à réception dudit signal par une unité récepteur, transport des poches auxquelles a été associée une information d'identification de la commande sur ladite piste jusqu'audit emplacement de prélèvement comprenant une étape d'actionnement automatique de moyens de déplacement automatique de moyens de suspension desdites poches à ladite piste, sur ladite piste.

Selon un aspect avantageux de l'invention, un tel procédé comprend une étape de tri des poches de ladite pluralité de poches comprenant une étape de regroupement des poches auxquelles a été associée une information d'identification de ladite commande dans au moins une zone dudit bâtiment.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- la figure 1 est une vue de dessus d'un exemple de mode de réalisation d'un système de remise de commande selon l'invention;
- la figure 2 est une vue en perspective du système de remise de commande présenté en référence à la figure 1 ;
- la figure 3 est une vue de détail en coupe partielle de la portion du système de remise d'une commande présenté en référence à la figure 1, située à l'extérieur de l'entrepôt du supermarché ;
- la figure 4 est une vue partielle en perspective d'un autre exemple de mode de réalisation d'un système de remise de commande selon l'invention ;
- la figure 5 est une représentation synoptique, sous forme de schéma-blocs, d'un exemple de procédé de remise d'une commande selon l'invention.

### 6. Description détaillée de l'invention

### 6.1 Exemple de mode de réalisation de l'invention

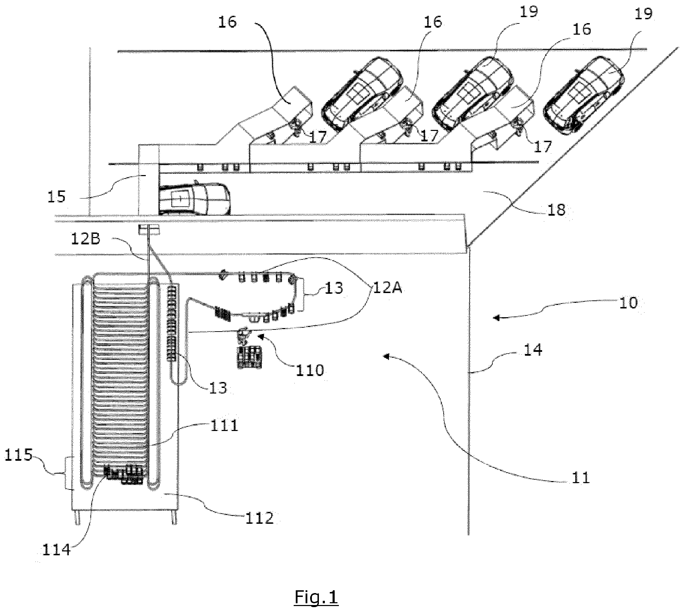

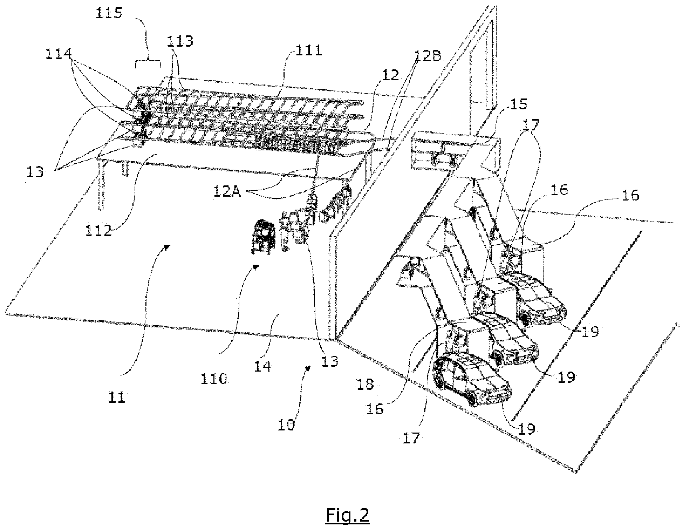

On a illustré sur les figures 1 et 2, respectivement dans une vue de dessus et une vue en perspective, un exemple de mode de réalisation d'un système 10 de remise d'une commande selon l'invention, mis en œuvre sur le site d'un supermarché.

Ce système 10 comprend un module de transport 11 présentant une piste de circulation 12 de poches souples 13 en toile formée d'un assemblage de tronçons de rail dans lesquels sont montés des chaines motorisées.

Dans ce mode de réalisation de l'invention, chaque poche est suspendue à des maillons d'une chaine de la piste par des crochets. Le déplacement des poches sur un tronçon de rail est assuré automatiquement par entrainement de la chaîne montée dans ce rail et des dispositifs de transfert, tels que par exemple des poussoirs, sont prévus pour faire passer les poches d'une chaine à l'autre.

La piste 12 est implantée dans un entrepôt 14 adjacent à la surface de vente du supermarché et s'étend à l'extérieur de l'entrepôt au travers d'un tunnel 15 qui débouche sur trois postes de prélèvement 16 des commandes présentant une ouverture pour permettre aux clients 17 destinataires d'un commande de retirer les différents articles de leur commande, livrés dans des sacs ou sans sac.

Le tunnel en hauteur chemine avantageusement au-dessus d'une voie de circulation 18 permettant aux clients de garer leur véhicule 19 à portée de bras d'un poste de prélèvement de commande.

La piste 12 est constituée d'une première boucle 12A qui permet de faire circuler les poches entre un poste de chargement 110 des poches et une zone de stockage 111 supportée par une mezzanine 112, et d'une seconde boucle 12B qui permet d'acheminer des poches entre la zone de stockage 111 et les postes de prélèvement 16.

Comme on peut le voir sur la figure 2, la piste présente trois séries de peignes 113 superposées au niveau de la zone de stockage 111. Des dents 114 des peignes situées à une extrémité distale 115 de la zone de stockage 111 sont plongées dans une ambiance de conservation au froid positif, ce qui permet d'y stocker des produits frais. La température au niveau des autres dents des peignes est la température ambiante de l'entrepôt.

On notera qu'avantageusement, dans la zone de stockage, les flancs des poches 13 sont repliés l'un contre l'autre lorsque ces dernières ne sont pas utilisées pour porter une partie d'une commande, ce qui permet un gain de place.

Au niveau du poste de chargement 110, les préparateurs qui arrivent avec une partie d'une commande déposent celle-ci dans la poche qui se présente en face d'eux.

On notera que chacune des poches 13 porte un identifiant, qui consiste dans ce mode de réalisation particulier de l'invention en un code-barre imprimé sur une des sangles de la poche. Cet identifiant est lu par un lecteur de code-barre lorsque la poche se présente face au préparateur et transmis au système de gestion d'entrepôt du supermarché (aussi désigné habituellement par son acronyme en anglais WMS, pour « Warehouse Management System »).

Une fois la partie de commande déposée sur la poche 13, il suffit au préparateur de confirmer sur un terminal, tel qu'une tablette tactile, que la partie de commande est bien déposée dans la poche.

Le système de gestion d'entrepôt affecte alors dans sa base de données d'affection des poches aux commandes, le numéro de la commande qui vient d'être validée par le préparateur sur son terminal à la poche dont l'identifiant a été scanné.

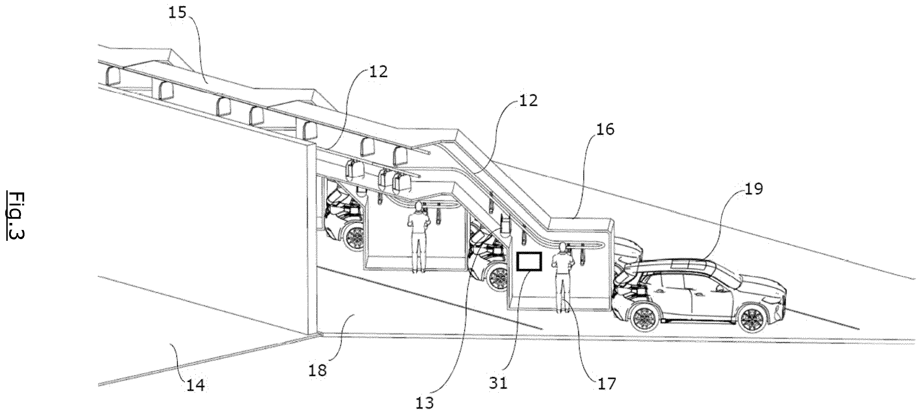

Sur la figure 3, qui est une vue de détail en coupe partielle de la portion du système de remise d'une commande 10 située à l'extérieur de l'entrepôt du supermarché, on peut voir que chaque poste de prélèvement 16 est équipé d'un écran tactile 31 qui permet au client de saisir un code numérique attribué à sa commande, qu'il a reçu par email ou par SMS (acronyme en anglais de « Short Message Service » ) sur son smartphone. La saisie de ce code permet au client de signaler sa présence devant l'un des postes de prélèvement au système de gestion d'entrepôt, lequel va alors adresser un signal au système 10 contenant des instructions de remettre la commande du client au poste de prélèvement où le client 17 a saisi son code. Le système de remise de commande 10 va alors acheminer les différentes poches contenant des parties de la commande du client vers le tunnel 15 et distribuer ces différentes poches sur le tronçon de piste reliant le tunnel au poste de prélèvement 16.

Dans des variantes de ce mode de réalisation particulier de l'invention, il peut également être envisagé de permettre au client venant récupérer sa commande de signaler sa présence à proximité du poste de prélèvement en scannant un code barre ou un QR code qu'il a reçu sur son smartphone, par lecture de la bande magnétique d'une carte du magasin attribué à ce client, en s'identifiant à l'aide d'un lecteur d'identification biométrique, ou en utilisant une application dédiée téléchargée sur son smartphone. Dans encore d'autres variantes de ce mode de réalisation particulier de l'invention, il peut être envisagé d'utiliser un système de géolocalisation du smartphone du client afin de détecter sa présence à proximité d'un poste de prélèvement.

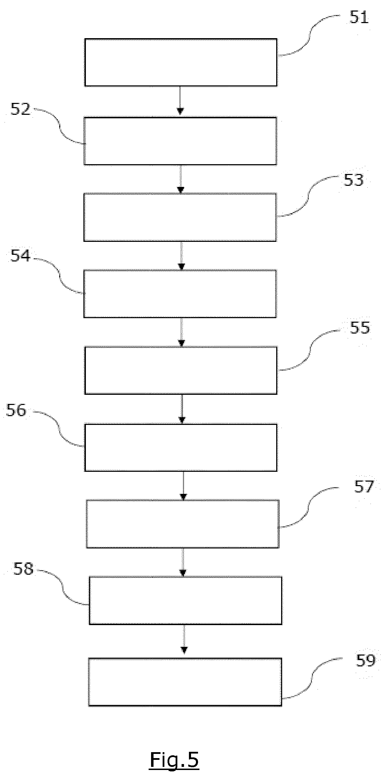

On a représenté sur la figure 5, les étapes d'un exemple de mode de réalisation d'un procédé de remise d'une commande selon l'invention mis en œuvre à l'aide du système de remise d'une commande 10, sous forme de diagramme.

Après que le client a passé une commande de différents articles sur le site internet du magasin, le système de gestion d'entrepôt envoie des instructions aux préparateurs d'aller collecter les articles de la commande dans les zones des produits frais, des produits surgelés, et des produits secs et/ou dans la réserve du magasin (étape 51). On notera que lors de cette étape un préparateur peut collecter dans une même tournée de ramassage des articles pour plusieurs commandes distinctes. Lors de cette collecte les préparateurs déposent certains articles ensemble dans un même sac ou dans plusieurs sacs (étape 52).

Dans une étape 53, les préparateurs se rendent dès qu'ils ont achevé leur tournée de ramassage au poste de chargement 110 des poches 13 et déposent les sacs et les articles qui ne sont pas emballés dans des sacs chacun dans une des poches du système de remise d'une commande 10 qui se présente successivement au poste de chargement.

Il convient de noter que, dans le cadre de l'invention, les préparateurs peuvent accéder au poste de chargement sans ordre prédéfini et déposer des sacs ou les articles sans sac dans n'importe quel ordre dans les poches qui se présentent au poste de chargement 110.

Lors de cette étape 53, l'identifiant de chacune des poches qui se présentent successivement au poste de chargement est scanné et transmis au système de gestion d'entrepôt.

Après avoir déposé un sac ou un article dans une poche, les préparateurs confirment que le chargement a été effectuée à l'aide d'une tablette tactile et renseignent à quelle commande correspond l'article qui a été déposé sur la poche. Dans une variante de ce mode de réalisation de l'invention, il peut également être envisagé que les opérateurs scannent un code imprimé sur les sacs des commandes. Une information d'identification de la commande est alors associée par le système de gestion d'entrepôt à la poche en attente au poste de chargement (étape 54) et cette poche est entraînée sur la piste du module de déplacement, afin de laisser la place à une nouvelle poche.

Les poches dans lesquelles ont été déposées des articles sont ensuite entreposées, dans une étape 55, dans une zone des peignes de la zone de stockage en fonction du contenu des articles qu'elles portent, les articles frais étant par exemple dirigées vers la zone 115.

Lorsqu'un client signale qu'il est arrivé à proximité d'un poste de prélèvement de commande en entrant le code de sa commande sur le clavier tactile du poste de prélèvement (étape 56), un signal de confirmation est émis par le système de gestion et transmis, par exemple par ondes radio au module de transport 11 (étape 57), lequel va alors dans une première étape 58 procéder à un tri des poches afin de regrouper les poches auxquelles ont été associées une information d'identification de la commande dans une zone tampon de la piste 12, avant de les transporter, dans une étape 59, au travers du tunnel 15 jusqu'au poste de prélèvement auquel le client s'est présenté, afin qu'il puisse retirer les articles de sa commande.

### 6.2. Autre exemple de mode de réalisation de l'invention

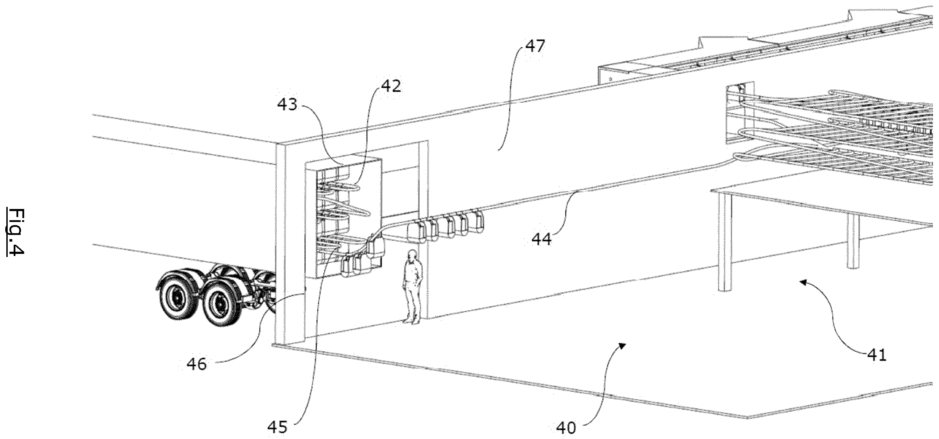

On a représenté sur la figure 4 un autre exemple d'un système de remise d'une commande 40 selon l'invention, permettant de remettre une commande à un camion de livraison de commandes sur des points relai.

Comme on peut le voir sur la figure 4, ce système 40 comprend, outre un module de transport 41 sensiblement identique à celui du système de remise d'une commande 11 décrit précédemment, un module d'entreposage de poches 42 motorisé monté dans le volume de chargement d'un camion 43.

Ce module d'entreposage 42 peut être connecté à la piste 44 du module de transport 41, via une unité de connexion 45 équipé d'un dispositif de transfert des poches entre la piste 44 et le module d'entreposage 42, en reculant l'arrière du camion jusqu'au niveau d'une porte 46 percée dans les parois extérieure de l'entrepôt 47.

Il convient de noter que dans ce mode réalisation de l'invention, le dispositif de transfert de poche a un fonctionnement réversible et peut aussi bien permettre de transférer les poches de la piste 44 vers le module d'entreposage 42 que du module d'entreposage vers la piste 42, afin de décharger le camion de ces poches.

## Revendications

1. Ensemble comprenant, d'une part, un système (10, 40) de remise automatique d'une commande, configuré pour transporter et stocker des parties d'une commande, mises ou non en sac(s), la commande constituée d'une pluralité d'articles stockés dans un bâtiment, sur un emplacement de prélèvement de ladite commande situé à l'extérieur dudit bâtiment et, d'autre part, une commande comprenant au moins une partie des articles constitutifs de la commande qui ont été déposés dans un ou des sacs et des articles qui n'ont pas été déposés dans un sac, ledit système comprenant:
- une pluralité de poches (13) adaptées pour recevoir un sac, une desdites poches comprenant le ou les sacs dans lesquels au moins une partie des articles constitutifs de la commande ont été déposés, ladite poche comprenant en outre les articles qui n'ont pas été déposés dans un sac ;
- des moyens d'association à des poches choisies dans ladite pluralité de poches dans lesquelles sont déposés des articles de ladite commande d'une information d'identification de ladite commande ;
- des moyens de signalement et/ou de détection de la présence d'un utilisateur auquel la commande doit être remise, ou d'un camion destiné à prendre en charge ladite commande, à proximité dudit emplacement de prélèvement ;
- un module de transport (11 ; 41) monté au moins partiellement en hauteur et comprenant :
- au moins une piste de déplacement (12 ; 44) dont au moins une portion substantielle s'étend à l'intérieur dudit bâtiment ;
- des moyens de suspension desdites poches à ladite piste ;
- des moyens de déplacement automatique desdits moyens de suspension sur ladite piste ;
- des moyens d'actionnement desdits moyens de déplacement automatique configurés pour déplacer les poches dans lesquelles ont été déposées les différentes articles de ladite commande et auxquelles a été associée une information d'identification de ladite commande, jusqu'audit emplacement de prélèvement lorsque lesdits moyens de signalement et/ou de détection émettent un signal de confirmation de la présence dudit utilisateur ou dudit camion à proximité dudit emplacement de prélèvement.

2. Ensemble selon la revendication 1, **caractérisé en ce que** ladite piste (12) comprend une chaîne logée dans un rail.

3. Ensemble selon l'une quelconque des revendications 1 et 2, **caractérisé en ce que** ladite piste (12) est fixée à un plafond ou à une mezzanine dudit bâtiment.

4. Ensemble selon l'une quelconque des revendications 1 à 3, **caractérisé en ce que** ledit module de transport (11) comprend des moyens de tri des poches de ladite pluralité de poches destinés à regrouper les poches auxquelles a été associée une information d'identification de ladite commande dans au moins une zone dudit bâtiment.

5. Ensemble selon l'une quelconque des revendications 1 à 4, **caractérisé en ce que** lesdits moyens de signalement et/ou de détection comprennent au moins un élément de signalement et/ou de détection appartenant au groupe comprenant au moins :
- lecteur de code barre ;
- lecteur de QR code ;
- lecteur de bande magnétique ou de puce ;
- clavier numérique permettant de saisir un code ;
- application dédiée téléchargeable sur un terminal de l'utilisateur ;
- lecteur d'identification biométrique, tel qu'un lecteur d'empreinte digitale ;
- capteur de présence ;
- système de géolocalisation.

6. Ensemble selon l'une quelconque des revendications 1 à 5, **caractérisé en ce que** lesdites poches (13) sont formées d'une toile, ou d'un filet, équipée de deux anses.

7. Ensemble selon l'une quelconque des revendications 1 à 6, **caractérisé en ce que** ledit module de transport (11) comprend des moyens de stockage temporaire d'au moins une desdites poches dans au moins une zone de stockage (111) en hauteur dudit bâtiment.

8. Ensemble selon la revendication 7, **caractérisé en ce que** ladite zone de stockage (111) est une zone à température contrôlée.

9. Ensemble selon l'une quelconque des revendications 1 à 8, **caractérisé en ce que** ledit module de transport comprend un tunnel (15) enveloppant une portion de ladite piste, s'étendant à l'extérieur dudit bâtiment au-dessus d'une voie de circulation pour véhicule automobile.

10. Ensemble selon l'une quelconque des revendications 1 à 9, **caractérisé en ce que** ledit emplacement de prélèvement de ladite commande est le volume de chargement d'un camion (43).

11. Ensemble selon la revendication 10, **caractérisé en ce que** ledit système (40) comprend un module d'entreposage de poches (42), destiné à être monté dans le volume de chargement dudit camion, et des moyens de connexion dudit module d'entreposage de poches avec ladite piste (44), comprenant des moyens de transfert desdites poches dudit module d'entreposage vers ladite piste.

12. Procédé de remise automatique d'une commande, constituée d'une pluralité d'articles stockés dans un bâtiment, sur un emplacement de prélèvement de ladite commande situé à l'extérieur dudit bâtiment, ledit procédé comprenant les étapes suivantes :
- collecte des articles constitutifs de ladite commande et dépose d'au moins une partie desdits articles dans au moins un sac ;
- dépose dudit ou desdits sacs et des articles qui n'ont pas été déposés dans un sac chacun dans une poche (13) choisie dans une pluralité de poches et suspendue à une piste (12 ; 44)d'un module de transport (11 ;41) montée au moins partiellement en hauteur ;
- association auxdites poches dans lesquelles ont été déposées des parties de ladite commande d'une information d'identification de ladite commande ;
- signalement et/ou de détection de la présence d'un utilisateur (17) auquel la commande doit être remise, ou d'un camion (43) destiné à prendre en charge ladite commande, à proximité dudit emplacement de prélèvement comprenant une étape d'émission d'un signal de confirmation de la présence dudit utilisateur (17) ou dudit camion (43) à proximité dudit emplacement de prélèvement ;
- à réception dudit signal par une unité récepteur, transport des poches (13) auxquelles a été associée une information d'identification de la commande sur ladite piste jusqu'audit emplacement de prélèvement comprenant une étape d'actionnement automatique de moyens de déplacement automatique de moyens de suspension desdites poches à ladite piste, sur ladite piste.

13. Procédé de remise automatique d'une commande selon la revendication 12, **caractérisé en ce qu'**il comprend une étape de tri des poches (13) de ladite pluralité de poches comprenant une étape de regroupement des poches auxquelles a été associée une information d'identification de ladite commande dans au moins une zone dudit bâtiment.

## Patentansprüche

1. Anordnung, die einerseits ein System zur automatischen Übergabe einer Bestellung (10, 40) umfasst, das dazu ausgebildet ist, Teile einer Bestellung zu transportieren und zu lagern, unabhängig davon, ob diese in Beuteln verpackt sind oder nicht, wobei die Bestellung aus einer Mehrzahl von Artikeln besteht, die in einem Gebäude gelagert sind, an einer außerhalb des Gebäudes gelegenen Entnahmestelle für die Bestellung, und andererseits eine Bestellung, die wenigstens einen Teil der die Bestellung bildenden Artikel umfasst, die in einen oder mehrere Beutel verpackt wurden, sowie Artikel, die nicht in einem Beutel abgelegt wurden, wobei das System umfasst:
- eine Mehrzahl von Taschen (13), die dazu ausgebildet sind, einen Beutel aufzunehmen, wobei eine dieser Taschen den oder die Beutel umfasst, in denen wenigstens ein Teil der Artikel, aus denen die Bestellung besteht, abgelegt wurde, wobei diese Tasche ferner die Artikel umfasst, die nicht in einem Beutel abgelegt wurden,
- Mittel zum Zuordnen einer Identifikationsinformation der Bestellung zu aus der der Mehrzahl von Taschen gewählten Taschen, in denen Artikel der Bestellung abgelegt sind,
- Mittel zur Signalisierung und/oder Erkennung der Anwesenheit eines Nutzers, dem die Bestellung übergeben werden soll, oder eines Lastwagens, der dazu bestimmt ist, die Bestellung abzuholen, in der Nähe der Entnahmestelle,
- ein wenigstens teilweise in der Höhe angebrachtes Transportmodul (11; 41), das umfasst:
- wenigstens eine Bewegungsbahn (12; 44), von der sich wenigstens ein wesentlicher Abschnitt innerhalb des Gebäudes erstreckt,
- Mittel zum Aufhängen der Taschen an der Bahn,
- Mittel zum automatischen Bewegen der Aufhängemittel an der Bahn,
- Mittel zum Betätigen der Mittel zum automatischen Bewegen, die dazu ausgebildet sind, die Taschen, in denen die verschiedenen Artikel der Bestellung abgelegt wurden und denen eine Identifikationsinformation der Bestellung zugeordnet wurde, zu der Entnahmestelle zu bewegen, wenn die Signalisierungs- und/oder Erkennungsmittel ein Signal zur Bestätigung der Anwesenheit des Nutzers oder des Lastwagens in der Nähe der Entnahmestelle senden.

2. Anordnung nach Anspruch 1, **dadurch gekennzeichnet, dass** die Bahn (12) eine in einer Schiene aufgenommene Kette umfasst.

3. Anordnung nach einem der Ansprüche 1 und 2, **dadurch gekennzeichnet, dass** die Bahn (12) an einer Decke oder einem Zwischengeschoss des Gebäudes befestigt ist.

4. Anordnung nach einem der Ansprüche 1 bis 3, **dadurch gekennzeichnet, dass** das Transportmodul (11) Mittel zum Sortieren von Taschen der Mehrzahl von Taschen umfasst, die dazu bestimmt sind, die Taschen, denen eine Identifikationsinformation der Bestellung zugeordnet wurde, in wenigstens einem Bereich des Gebäudes zu gruppieren.

5. Anordnung nach einem der Ansprüche 1 bis 4, **dadurch gekennzeichnet, dass** die Signalisierungs- und/oder Erkennungsmittel wenigstens ein Signalisierungs- und/oder Erkennungselement umfassen, das zu der Gruppe gehört, die wenigstens umfasst:
- ein Barcode-Lesegerät,
- ein QR-Code-Lesegerät,
- ein Magnetstreifen- oder Chip-Lesegerät,
- eine numerische Tastatur, die es ermöglicht, einen Code zu erfassen,
- eine spezielle Anwendung, die auf ein Endgerät des Nutzers heruntergeladen werden kann,
- ein biometrisches Identifikationslesegerät, wie beispielsweise ein Fingerabdrucklesegerät,
- einen Anwesenheitssensor,
- ein Geolokalisierungssystem.

6. Anordnung nach einem der Ansprüche 1 bis 5, **dadurch gekennzeichnet, dass** die Taschen (13) aus einem Stoff oder einem Netz gebildet und mit zwei Henkeln versehen sind.

7. Anordnung nach einem der Ansprüche 1 bis 6, **dadurch gekennzeichnet, dass** das Transportmodul (11) Mittel zur vorübergehenden Lagerung wenigstens einer der Taschen in wenigstens einem Lagerbereich (111) in der Höhe des Gebäudes umfasst.

8. Anordnung nach Anspruch 7, **dadurch gekennzeichnet, dass** der Lagerbereich (111) ein temperaturgeregelter Bereich ist.

9. Anordnung nach einem der Ansprüche 1 bis 8, **dadurch gekennzeichnet, dass** das Transportmodul einen Tunnel (15) umfasst, der einen Abschnitt der Bahn umgibt, der sich außerhalb des Gebäudes über einer Fahrbahn für Kraftfahrzeuge erstreckt.

10. Anordnung nach einem der Ansprüche 1 bis 9, **dadurch gekennzeichnet, dass** die Entnahmestelle der Bestellung der Laderaum eines Lastwagens (43) ist.

11. Anordnung nach Anspruch 10, **dadurch gekennzeichnet, dass** das System (40) ein Taschenlagerungsmodul (42) umfasst, das dazu bestimmt ist, im Laderaum des Lastwagens angebracht zu werden, und Mittel zum Verbinden des Taschenlagerungsmoduls mit der Bahn umfasst (44), die Mittel zum Transfer der Taschen von dem Lagerungsmodul zu der Bahn umfassen.

12. Verfahren zur automatischen Übergabe einer Bestellung, die aus einer Mehrzahl von in einem Gebäude gelagerten Artikeln besteht, an einer außerhalb des Gebäudes gelegenen Entnahmestelle für diese Bestellung, wobei das Verfahren die folgenden Schritte umfasst:
- Aufnahme der die Bestellung bildenden Artikel, und Ablage wenigstens eines Teils dieser Artikel in wenigstens einem Beutel,
- Ablage des oder der Beutel und der nicht in einen Beutel abgelegten Artikel jeweils in eine Tasche (13), die aus einer Mehrzahl von Taschen gewählt und an einer Bahn (12; 44) eines wenigstens teilweise in der Höhe angebrachten Transportmoduls (11; 41) aufgehängt ist,
- Zuordnung einer Identifikationsinformation der Bestellung zu den Taschen, in denen Teile der Bestellung abgelegt wurden,
- Signalisierung und/oder Erkennung der Anwesenheit eines Nutzers (17), dem die Bestellung übergeben werden soll, oder eines Lastwagens (43), der dazu bestimmt ist, die Bestellung abzuholen, in der Nähe der Entnahmestelle, umfassend einen Schritt des Sendens eines Signals zur Bestätigung der Anwesenheit des Nutzers (17) oder des Lastwagens (43) in der Nähe der Entnahmestelle,
- bei Empfang des Signals durch eine Empfangseinheit Transport der Taschen (13), denen eine Identifikationsinformation der Bestellung zugeordnet wurde, an der Bahn bis zu der Entnahmestelle, umfassend einen Schritt der automatischen Betätigung von Mitteln zum automatischen Bewegen von Aufhängemitteln der Taschen an der Bahn.

13. Verfahren zur automatischen Übergabe einer Bestellung nach Anspruch 12, **dadurch gekennzeichnet, dass** es einen Schritt des Sortierens der Taschen (13) der Mehrzahl von Taschen umfasst, der einen Schritt des Gruppierens der Taschen, denen eine Identifikationsinformation der Bestellung zugeordnet wurde, in wenigstens einem Bereich des Gebäudes umfasst.

## Claims

1. An assembly comprising, on the one hand, an automatic order delivery system (10, 40) configured to transport and store parts of an order, whether or not bagged, the order consisting of a plurality of items stored in a building, at a collection point for said order located outside said building and, on the other hand, an order comprising at least some of the items constituting the order which have been placed in one or more bags and items which have not been placed in a bag, said system comprising:
- a plurality of pouches (13) adapted to receive a bag, one of the said pouches containing the bag or bags into which at least some of the items comprising the order have been placed, the said pocket also containing the items that have not been placed in a bag;
- means for associating with selected pouches in said plurality of pouches in which articles of said order are deposited information identifying said order;
- means for signalling and/or detecting the presence of a user to whom the order is to be delivered, or of a truck intended to take charge of said order, in the vicinity of said picking location;
- a transport module (11; 41) mounted at least partially at height and comprising:
- at least one travel track (14, 44), at least a substantial portion of which extends into said building;
- means for suspending said pouches from said track;
- means for automatically moving said suspension means on said track;
- means for actuating said automatic displacement means configured to displace the pouches in which the various items of said order have been deposited and to which information identifying said order has been associated, to said pick-up location when said signalling and/or detection means emit a signal confirming the presence of said user or said truck in the vicinity of said pick-up location.

2. The assembly of claim 1, **characterised in that** said track (12) comprises a chain housed in a rail.

3. The assembly according to any one of claims 1 and 2, **characterised in that** said track (12) is attached to a ceiling or a mezzanine of said building.

4. The assembly according to any one of claims 1 to 3, **characterised in that** said transport module (11) comprises means for sorting the pouches of said plurality of pouches intended to group together the pouches to which identification information of said order has been associated in at least one zone of said building.

5. The assembly according to any one of claims 1 to 4, **characterised in that** said signalling and/or detection means comprise at least one signalling and/or detection element belonging to the group comprising at least:
- barcode reader;
- QR code reader;
- magnetic strip or chip reader;
- numeric keypad to enter a code;
- dedicated application downloadable on a user's terminal;
- biometric identification reader, such as a fingerprint reader;
- presence sensor;
- geolocation system.

6. The assembly according to any one of claims 1 to 5, **characterised in that** said pouches (13) are formed of a cloth, or a net, equipped with two handles.

7. The assembly according to any one of claims 1 to 6, **characterised in that** said transport module (11) comprises means for temporarily storing at least one of said pouches in at least one high storage area of said building.

8. The assembly according to claim 7, **characterised in that** said storage (111) area is a temperature controlled area.

9. The assembly according to any one of claims 1 to 8, **characterised in that** said transport module comprises a tunnel (15) enveloping a portion of said track, extending outside said building above a motor vehicle traffic lane.

10. The assembly according to any one of claims 1 to 9, **characterised in that** said pick-up location of said order is the loading volume of a truck (43).

11. The assembly according to claim 10, **characterised in that** the system (40) comprises a pouch storage module (42), intended to be mounted in the loading volume of said truck, and means for connecting said pouch storage module with said track (44), comprising means for transferring said pouches from said storage module to said track.

12. A method of automatically delivering an order, consisting of a plurality of articles stored in a building, to a pick-up location for said order located outside said building, the method comprising the following steps:
- collecting the articles constituting said order and depositing at least part of said articles in at least one bag;
- depositing said one or more bags and items not deposited in a bag each in a pouch (13) selected from a plurality of pouches and suspended from a track (12; 44) of a transport module (11; 41) mounted at least partially overhead;
- associating with said pouches in which parts of said order have been deposited information identifying said order;
- signalling and/or detecting the presence of a user (17) to whom the order is to be delivered, or of a truck (43) intended to take charge of said order, in the vicinity of said pick-up location, comprising a step of transmitting a signal confirming the presence of said user (17) or said truck (43) in the vicinity of said pick-up location;
- upon reception of said signal by a receiver unit, transporting the pouches (13) with which an identification information of the order has been associated on said track to said picking location comprising a step of automatic actuation of means for automatically moving means for suspending said pouches from said track.

13. A method of automatically delivering an order according to claim 12, **characterised in that** it comprises a step of sorting the pouches (13) of said plurality of pouches comprising a step of grouping the pouches with which an identification information of said order has been associated in at least one zone of said building.
